Europäisches Patentamt

European Patent Office

Office européen des brevets

(19)

(11) EP 1 335 510 A1

(12) EUROPEAN PATENT APPLICATION

(43) Date of publication:
13.08.2003 Bulletin 2003/33

(51) Int Cl.7: H04B 10/158, H04B 10/148,
H04B 10/142, H04B 10/135

(21) Application number: 02003039.1

(22) Date of filing: 12.02.2002

(84) Designated Contracting States:
AT BE CH CY DE DK ES FI FR GB GR IE IT LI LU
MC NL PT SE TR
Designated Extension States:
AL LT LV MK RO SI

(71) Applicant: HUBER & SUHNER AG
9100 Herisau (CH)

(72) Inventors:
• Draheim, Falk
8051 Zürich (CH)

• Goebel, Uhland
8094 Wila (CH)
• Neubert, Jakob
8050 Zürich (CH)
• Ruzicka, Jakob
8038 Zürich (CH)
• Serbe, Peter
8050 Zürich (CH)

(74) Representative: OK pat AG
Chamerstrasse 50
6300 Zug (CH)

(54) **Delay-line interferometer based on single-mode fibers**

(57) Device comprising a device input (21) for receiving a D-PSK-encoded light wave s(t). The light wave s(t) is guided towards a first beam splitter (22) having an input, a first output (32) and a second output (33). A first single-mode fiber segment (24) having a segment input (32) and a segment output (35), and a second single-mode fiber segment (25) having a segment input (33) and a segment output (34) are provided. The two segment inputs are connected to the outputs of the first beam splitter (22). A second beam splitter (23) having two inputs (34,35) and two outputs (36,37) is connected to the two segments outputs. The first single-mode fiber segment (24) has a total optical length LI and the second single-mode fiber segment (25) has a total optical length LO, with LI being smaller than LO. The first single-mode fiber segment (24) has a total bending angle AI and the second single-mode fiber segment (25) has a total bending angle AO, with AI = AO to ensure equal polarisation in both single-mode fiber segments.

Fig. 2A

EP 1 335 510 A1

## EP 1 335 510 A1

**Description**

The present invention concerns delay-line interferometers and in particular delay line-based Differential Phase Shift Keying (D-PSK) systems, optical receivers and communication systems based thereon.

Background art

Components for optical communication systems are either realized using fiber technology or planar waveguide technology. The planar waveguide technology is becoming more and more popular since it allows optical and electrical functions to be combined. Due to this complex systems can be realized more easily. Planar waveguide-based systems however have several inherent disadvantages, some of which can be avoided or controlled taking special countermeasures.

In planar waveguide-based optical systems, light is usually received through a fiber. At the interface between the fiber and the waveguide, there are coupling losses which means that only a certain fraction of the arriving light wave is coupled into the planar waveguide. Another disadvantage is that the planar waveguides cause losses when guiding a light wave. The coupling losses and the waveguide losses are just two prominent examples of problems encountered when employing waveguide-based optical systems.

There are three major approaches to optical communication, that are somewhat related to the D-PSK system, as presented herein after.

On-Off-Keying (OOK) optical receiver systems apply Intensity Modulation (IM). While early systems severely suffered from circuit noise within the optical receiver, those systems were relatively simple and are nowadays the standard solution for many optical communication systems. The sensitivity of those systems could greatly improved by the incorporation of Erbium Doped Fiber Amplifiers (EDFAs). On the other hand, the transmission capacity had been steadily improved applying Wavelength Division Multiple Access (WDMA) schemes. Those systems are state of the art now, nevertheless the initial simplicity is sacrificed for the sake of the mentioned performance improvements.

Phase Shift Keying (PSK) is an alternative transmission concept. It is fostered by the availability of the optical key components, which are optical couplers and stable, tunable lasers. A PSK receiver applies a local oscillator (LO) laser as reference signal. The local oscillator laser is tuned to the received light - which is the reason for the required stability of the lasers operating frequency - superimposed on the received light, e.g. by the means of the optical coupler. Then the intrinsic quadratic non-linearity of a receiving photo diode is used, to mix the received signal into a suitable intermediate frequency (which then would be called a heterodyne receiver) or directly into the base band (for a so-called homodyne receiver). Homodyne receivers offer an exceptionally high receiver sensitivity, yet they heterodyne and homodyne receivers both require ultrastable Nd:YAG-lasers and a very good understanding of the relevant physical processes. Establishing a homodyne communication system around a set of relatively low-cost Distributed Feedback (DFB) lasers is feasible.

Differential Phase Shift Keying (D-PSK) is slightly modified compared against a basic PSK system. The term 'differential' indicates, that the information is encoded into the symbol-to-symbol phase change rather than into an absolute phase value. This avoids both the phase ambiguity inherent to a true PSK scheme and moreover it avoids the necessity of a dedicated optical carrier recovery. To achieve this, the received signal is mixed with a delayed copy of itself rather than the signal of a local oscillator (LO) laser. Thus the need for the controlled local oscillator laser is resolved, yet at some cost.

First of all there is a moderate sensitivity penalty. Moreover, some other critical issues arise. One needs a very stable optical delay line. Preferably, temperature and ageing effects have to be dealt with. Furthermore, there is a need for an appropriate optical pre-amplification.

Communication systems designed for handling Differential Phase Shift Keyed (D-PSK) optical signals need to be able to compare adjacent symbols, since the actual information is represented by the phase shift between two adjacent symbols (referred to as "symbol-to-symbol phase change"). This can be achieved using a delay-line interferometer as a basic building block.

A delay-line interferometer, such as a Mach-Zehnder Interferometer, comprises two optical branches of different total lengths which provide for a well-defined delay of two optical signals corresponding to the duration of a symbol. At the output side of the delay-line interferometer the two optical signals are superposed in order to be able to extract information from the received D-PSK encoded optical signal. It is absolutely critical in such a delay-line interferometer that the polarization between the two branches remains the same.

A delay-line interferometer for processing D-PSK signals is difficult to realize using conventional planar waveguide technology, since polarization effects are very difficult to control in planar waveguides. One branch has to be longer than the other to introduce the necessary delay. This means that at least one of the two branches has to comprise curved sections. A curved waveguide, however, changes the polarization as the light wave travels through it. Since the routing of the two branches is different, the two light waves which have the same polarization at the input side of the two branches show different polarizations at the output side. Difficulties are also faced at the interface where the D-PSK encoded optical signal is coupled from a fiber into the delay-line interferometer's planar waveguide.

Given these inherent disadvantages, it seems better to use a fiber-based rather than a waveguide-based approach when realizing a D-PSK system. This would allow to realize a so-called all-optical system where fiber-to-waveguide coupling can be avoided. In a fiber-based system, however, the different routings of the two branches of the delay-line interferometer would also lead to different polarizations at the output side.

It is another problem that a delay-line interferometer is sensitive to variations in the ambient conditions. A temperature change, for example, introduces temperature gradients that might have a different impact on the optical properties of the two branches. Temperature drift compensation means can be integrated into a planar waveguide delay-line interferometer to provide for a compensation that reduces temperature induced disturbances. In planar waveguide systems resistors can be integrated close to the waveguides thus allowing to realize an active temperature compensation setup.

A fiber-based delay-line interferometer is difficult to protect against temperature changes, since it is difficult to heat the two fiber branches in a controlled manner.

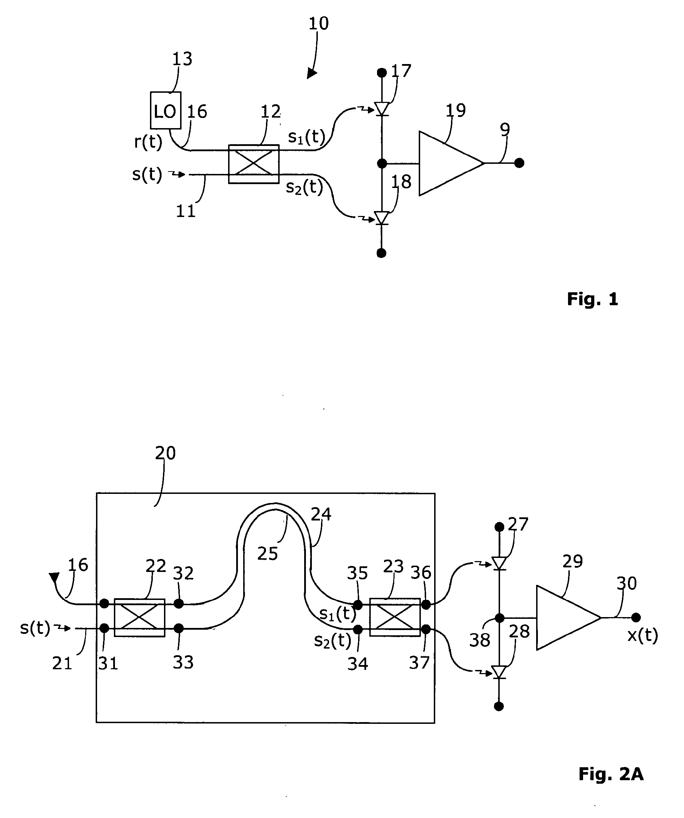

A simple PSK system 10 is illustrated in Figure 1. The system 10 comprises an input 11 for receiving an optical PSK encoded signal s(t) to be processed. There is a local oscillator 13 (laser) coupled to another input 16. The system 10 comprises a coupler (hybrid) 12 which provides for a superposition of the received optical signal s(t) with the local oscillator laser's light r(t). At the output side of the coupler 12 the two optical signals $s_1(t)$ and $s_2(t)$ are fed into a balanced amplifier 17, 18, 19. The resulting signal is made available at the amplifier's output 9. In order to meet the stringent requirements of these kind of PSK receivers, an expensive laser is required as local oscillators (LO) 13. In a PSK receiver 10 both the optical frequency and the polarization of the two light waves (i.e. the received light wave s (t) and the local oscillator laser's light r(t)) need be matched to each other. This requirement is fundamental and common to all receivers working with the superposition of light waves.

Such a system 10 is not suited for processing Differential Phase Shift Keyed (D-PSK) signals s(t). A superposition of the differently polarized signals in a hybrid would not allow to extract the information that was carried by the received D-PSK signal s(t) at the input.

It is an object of the invention to provide an improved fiber-based delay-line interferometer that is suited for use in D-PSK communication systems.

It is another object of the invention to provide a fiber-based delay-line interferometer designed for processing optical D-PSK signals.

It is another object of the invention to provide improved optical receivers and communication systems comprising a delay-line interferometer for processing D-PSK signals.

Summary of the Invention

These and other objects are accomplished by a device according to claim 1, an optical receiver according to claim 17, an optical transmission system according to claim 19, a wavelength division multiplexer (WDM) according to claim 20, and a method according to claim 21.

Further advantageous implementations are claimed in claims 2 - 16, 18, and 21 - 24.

The invention finds application in improving optical signal reception particularly in optical transmission systems with direct detection.

It is one advantage of the present invention that it avoids the need for means that allow an active polarization control.

Brief description of the drawings

For a more complete description of the present invention and for further objects and advantages thereof, reference is made to the following description, taken in conjunction with the accompanying drawings, in which:

**FIG. 1**     is a schematic representation of a conventional PSK receiver;

**FIG. 2A**     is a schematic representation of a D-PSK system, according to the present invention;

**FIG. 2B**     is an equivalent representation of the D-PSK system of Figure 2A;

**FIG. 3**     is a diagram depicting the transfer functions of the constructive branch and the destructive branch of a D-PSK system, according to the present invention;

**FIG. 4**    is a schematic cross-section of two fiber branches of a D-PSK system, according to the present invention;

**FIG. 5**    is a schematic cross-section of one fiber branch of a D-PSK system, according to the present invention;

**FIG. 6**    is a schematic top view of two fiber branches of a D-PSK system, according to the present invention;

**FIG. 7**    is a schematic representation of another D-PSK system, according to the present invention;

**FIG. 8**    is a schematic top view of two fiber branches of a D-PSK system, according to the present invention;

**FIG. 9**    is a schematic top view of two fiber branches of a D-PSK system, according to the present invention.

Detailed description

According to the present invention, an optical device is provided that comprises a special delay-line interferometer 20 (Mach-Zehnder Interferometer). This delay-line interferometer 20, as illustrated in Figure 2A, is designed to allow an optical signal s(t) to be processed after it is received at an input 21. The delay-line interferometer 20 comprises two branches 24, 25 of different total lengths which provide for a well-defined delay between two intermediate optical signals. At the output side the two intermediate optical signals $s_1(t)$ and $s_2(t)$ are superposed by a coupler 23 and fed into a balanced amplifier 27, 28, 29.

In addition to the single-mode fiber segments 24, 25, the delay-line interferometer 20 comprises an input 21 for receiving a D-PSK coded, polarized light wave s(t). A first beam splitter 22 (3dB-coupler) having an input 31, and a first and a second output 32, 33 is connected with its input 31 to the input 21. One output 32 of the first beam splitter 22 is coupled (optically connected) to the first single-mode fiber segment 24 and the other output 33 of the first beam splitter 22 is coupled (optically connected) to the second single-mode fiber segment 25. A second beam splitter 23 is situated at the output side of the two fiber segments 24, 25. The beam splitter 23 has a first input 35, a second input 34, a first output 36, and a second output 37. The first input 35 is optically connected to the output of the first fiber segment 24, and the second input 34 is optically connected to the output of the second fiber segment 25.

As mentioned, the information carried by the signal s(t) is coded using D-PSK. The phase shift between two adjacent symbols of s(t) carries the information, whereby each symbol represents one bit. It is thus necessary to provide for a well-defined delay that exactly corresponds to the length of one symbol. At the output side 34, 35 the two intermediate optical signals $s_1(t)$ and $s_2(t)$ are superposed, after the intermediate optical signal that had to travel through the longer delay line 24 has been delayed by the length of one symbol with respect to the intermediate optical signal that went through the shorter delay line 25. Assuming that the optical signal s(t) at the input side of the delay-line interferometer 20 carries a first symbol that has a phase of +90° followed by a second symbol having a phase of -90°, then a constructive interference occurs at the point 38 of the balanced amplifier. In case of a constructive interference, the balanced receiver makes available an output signal x(t) to indicate that a bit was received. If a sequence of two symbols is received at the input side 31 where both symbols either have a phase of -90° ,or a phase of +90° , then a destructive interference occurs and the balanced receiver 27, 28, 29 outputs no signal x(t). This setup allows a symbol of the received optical signal s(t) to be compared with a subsequent symbol of the same optical signal s(t).

In order to be able to provide for the desired delay, one of the optical branches 24 has to be longer than the other branch 25. The problem is when using single-mode (SM) fibers for the two branches that bending the fibers introduces stress and strain into the fiber core. This influences the polarization of a light wave traveling through the fiber. When two branches of different lengths are needed, usually the total bending angle of one branch is larger than the total bending angle of the other branch. This leads to different polarization effects on the two optical signals, and a superposition of the optical signals after having traveled through the two branches does not allow to extract the information carried by the optical signal s(t) received at the input side 31.

A special delay-line interferometer 20 based on single-mode fiber segments 24, 25 is proposed, where the required well-defined delay is introduced while at the same time ensuring that the polarization of each intermediate optical signal $s_1(t)$, $s_2(t)$ is the same at the output side 35, 34 of the two branches 24, 25. In order to be able to achieve this, the following design rules have been formulated:

    1. the first single-mode fiber segment 24 has a total optical length LI and the second single-mode fiber segment 25 has a total optical length LO, with LI < LO,
    2. the first single-mode fiber segment 24 has a total bending angle AI and the second single-mode fiber segment 25 has a total bending angle AO, with AI = AO in order to avoid a polarization mismatch at the output side 34, 35 of the first and second single-mode fiber segments 24, 25.

When these design rules are satisfied, the total polarization effect in both single-mode fiber segments 24 and 25 is the same. In other words, the two intermediate optical signals have the same polarization at the output side of the single-mode fiber segments 24 and 25. The pre-defined delay is determined by the difference between the total optical length LI and the total optical length LO, whereby the first single-mode fiber segment 24 provides for a delay T1 and the second single-mode fiber segment 25 provides for a delay T2. For applications where a delay is required that is equal to the length of a symbol $T_s$, the following equation has to be satisfied: $T_s$ = T2 - T1.

When the design rules are not fully satisfied, there is an effective receiver performance penalty. In an extreme case where the relative polarization at the output side of the two fiber segments 24 and 25 is orthogonal, the information in the signal s(t) is completely lost.

The key is to develop designs for the routing of the two single-mode fiber segments serving as delay lines 24, 25 where the required delay is provided by the straight portions of the longer branch and not by the bent portions. When designing the two single-mode fiber segments, both branches have to extend from a first (evanescent field) coupler 22 (e.g., a single-mode 3-dB coupler having a 50% split ratio) to a second (evanescent field) coupler 23 (e.g., a single-mode 3-dB coupler having a 50% split ratio).

Such couplers utilize a narrow spacing between two adjacent fiber cores or wave guides thus allowing coupling between the cores due to electromagnetic fields which extend beyond each core boundary.

When designing the delay-line portion of the delay-line interferometer 20, one has to ensure that the first single-mode fiber segment 24 and the second single-mode fiber segment 25 are arranged so as to ensure that the curvature of the first single-mode fiber segment 24 and the curvature of the second single-mode fiber segment 25 satisfy the condition RI = RO. In other words, the sum of all polarization changing effects in the first single-mode fiber segment 24 and the sum of all polarization changing effects in the second single-mode fiber segment 25 have to be the same.

The difference LO - LI is chosen to provide for a desired run-time delay between the portion of the light wave that is guided via the first beam splitter 22 into the first single-mode fiber segment 24 and the portion of the light wave that is guided via the first beam splitter 22 into the second single-mode fiber segment 25.

According to another embodiment of the present invention, the system comprises a first light sensitive device 27, a second light sensitive device 28, and an amplifier 29. The light sensitive devices 27 and 28 produce electrical output signals corresponding to an optical input. These elements 27, 28, 29 serve as a so-called balanced receiver where no output signal x(t) is provided at the output 30 if both light sensitive devices 27 and 28 receive the same optical signal. When the two light sensitive devices 27, 28 receive different optical signals, the output 30 provides for a signal x(t) representing that a bit was detected. In other words, the balanced amplifier 27, 28, 29 produces an electrical output signal x(t) representative of information carried by the D-PSK signal s(t) received.

Preferably, light sensitive diodes are employed as light sensitive devices 27 and 28. The first output 36 of the second beam splitter 23 is optically coupled to the first light sensitive device 27 and the second output 37 of the beam splitter 23 is optically coupled to the second light sensitive device 28. Transistors can be employed as light sensitive devices instead of the diodes whereby just one junction of the transistor would be used.

The device 20 is designed such that the polarization of the intermediate light waves at the input 32 of the first single-mode fiber segment 24 and at the input 33 of the second single-mode fiber segment 25 is the same. Furthermore, the polarization of the intermediate light waves at the output 35 of the first single-mode fiber segment 24 and at the output 34 of the second single-mode fiber segment 25 is the same. In other words, the relative polarization at the outputs 32, 33 is the same as the relative polarization at the inputs 34, 35.

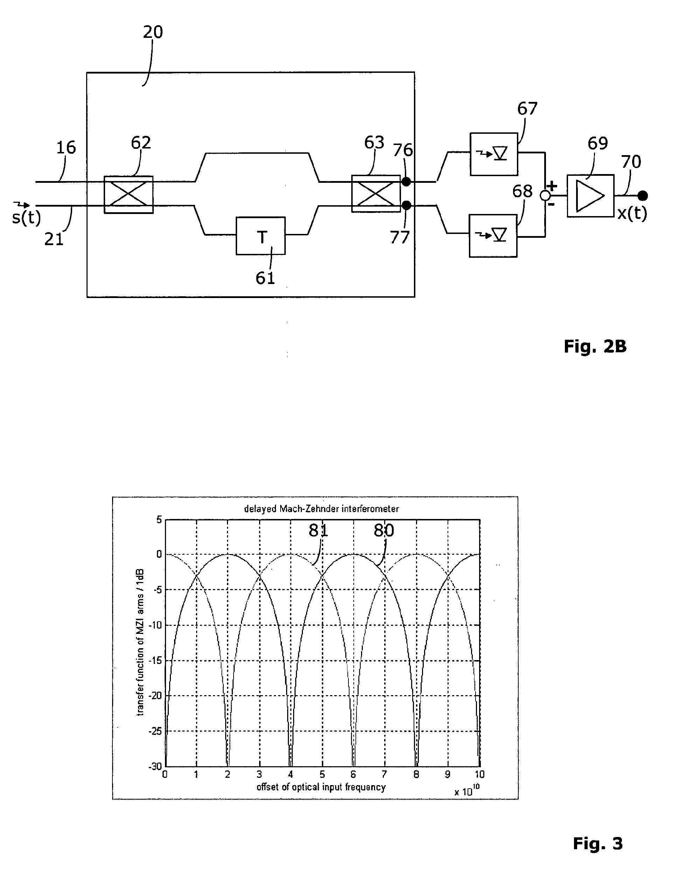

An equivalent diagram of a D-PSK receiver is illustrated in Figure 2B. The receiver comprises two couplers 62, 63 and a delay element 61. The two couplers 62, 63 and the delay element 61 serve as delayed Mach-Zehnder Interferometer. The receiver further comprises an input 21 for receiving a D-PSK signal s(t) and two output nodes 76, 77. A balanced receiver 67, 68, 69 is coupled to the output nodes 76, 77 of the Mach-Zehnder Interferometer 60.

The transfer function of a D-PSK receiver according to the present invention can easily be obtained according to the equivalent circuit shown in Figure 2B. The delayed Mach-Zehnder Interferometer 60 (i.e., the combination of the couplers 62, 63 and the delay element 61) has two output nodes 76, 77, one showing constructive the other showing destructive interference. Accordingly, the transfer function of the two arms of the interferometer are:

$$A_{MZI+} \propto e^{j\omega\frac{T}{2}} + e^{-j\omega\frac{T}{2}} \quad \text{and} \quad A_{MZI-} \propto e^{j\omega\frac{T}{2}} - e^{-j\omega\frac{T}{2}} \qquad (1.1)$$

At the photo diodes 67, 68 of the balanced receiver the optical signals are squared, since the photo current generation is based on the optical power rather than on the amplitude of the light waves. Hence, the photo diodes 67, 68 can be modeled by a squarer. This results in the following transfer functions for the two arms of the D-PSK receiver:

$$A_{RX+} \propto 1 + \cos(\omega T) \qquad \text{and} \qquad A_{RX-} \propto 1 - \cos(\omega T) \qquad (1.2)$$

These transfer functions 1.2 are periodic with a period of 1/T, where T is the delay introduced by the delay line (note that $T_s = T$ in a D-PSK system according to the invention, where $T_s$ is the symbol length). The transfer functions are shown in a logarithmic scale in Figure 3. A delay line length of 25 ps (i.e., $T_s = 25$ ps) is assumed. This delay line lengths is required for a 40 GBps receiver. The transfer function of the constructive arm of a D-PSK receiver according to the invention is depicted by reference number 81 and the transfer function of the destructive arm is depicted by reference number 80.

Light waves usually are characterised in terms of their wavelength. Therefore it is interesting to provide the period of the transfer functions in terms of a wavelength difference, too. A short calculation leads to

$$\lambda_0 = \frac{\lambda^2}{cT} \qquad (1.3)$$

where $\lambda_0$ is the period in terms of the wavelength, $T_s$ is the delay line length, c the velocity of light and $\lambda$ the wavelength of the optical wave. For the 40 GBps receiver under consideration, assuming an operating wavelength of 1550 nm, a wavelength period of 320 pm is resulting. Considering the fact, that the optical delay line 61 needs to be stabilized to a fractional part of that value, it becomes clear, that the physical realization of the delay line 61 is a difficult task.

The analysis of the polarization behaviour of the single mode fibers employed in the various embodiments presented herein follows the results of H. C. Levevre, who studied the physics of a polarization controlling device based on bent single mode fibers. The light wave at the input of a bent fiber segment can be considered to be the superposition of a planar wave in x-direction and another one in the y-direction. As Levevre showed, the velocity of the propagation of these waves is slightly different. It is given by:

$$\frac{\Delta v}{v} = a\left(\frac{r}{R}\right)^2, \qquad (1.4)$$

where a is a constant for a given fiber material and a given wavelength, the portion of the fiber, that carries the light wave shall have a radius *r*, while *R* shall denote the radius of the bend itself.

This difference in propagation speed results in a phase delay $\Delta\varphi$ between the x- and y-components of the light wave, which can be calculated to be

$$\Delta\varphi = 2\pi\frac{x}{\lambda}\frac{\Delta v}{v}, \qquad (1.5)$$

where *x* denotes the length of the bent fiber. This length can easily be expressed in terms of the angle $\alpha$ of the bend. Thus the phase delay $\Delta\varphi$ induced by the bending of the single mode fiber can be expressed as:

$$\Delta\varphi = \frac{2\pi ar^2}{\lambda}\frac{\alpha}{R} = const\frac{\alpha}{R} \qquad (1.6)$$

This result can be interpreted as follows: The phase delay $\Delta\varphi$ between the decomposed light wave portions is proportional to the ratio of the bending angle and the bend's radius. The absolute value of this phase delay $\Delta\varphi$ is also affected by the exact characteristics of the fiber and the actual wavelength of the light wave.

Applied to the two arms of a Mach-Zehnder Interferometer this leads to a fundamental design criterion: Given two arms with *i* or *j* bended segments, bent with the radii $r_i$ (and $r_j$, respectively) the bending angles $\alpha_i$ (and $\alpha_j$, respectively), then the phase delay between arms is matched, if:

$$\sum_i \frac{\alpha_i}{R_i} = \sum_j \frac{\alpha_j}{R_j}, \qquad (1.7)$$

where fiber segments $l_i$ form one arm of the interferometer and fiber segments $l_j$ the other one. $\alpha_i/r_i$ is referred to as effective bending angle. It is stressed, that this result is only true, if there is no bending perpendicular to another bent, i.e. the whole interferometer must be constructed strictly into one plane.

Out of plane behaviour of the single mode fiber can also be addressed by Levevre's approach. It is only required to decompose the actual state of polarization into components aligned to the actual bending of the fiber. Nevertheless, this procedure is tedious, and no other arrangement than the ones situated inside the plane will be relevant for practical application. One exception might be the matched transistion between different planes, e.g., if for some reasons different planes are required for the input and output side of the interferometer.

Another embodiment is characterized in that special measures are taken to reduce the system's sensitivity against temperature fluctuations. For this purpose a special mounting of the first single-mode fiber segment 24 and the second single-mode fiber segment 25 is employed. The special mounting comprises a substrate with low thermal conductivity and preferably with a thermal expansion coefficient matching the thermal expansion coefficient of the first and the second single-mode fiber segments 24, 25.

In another embodiment the fiber-based delay-line interferometer is employed together with a single-ended receiver. In yet another embodiment, a balanced receiver is employed that comprises two single-ended receivers, one for each output of the fiber-based delay-line interferometer. The output signals of the two single-ended receivers are fed into a differential amplifier.

The above-described embodiments can be further improved by active stabilizing means providing for reduced temperature deviations. This is important since the refractive index of the single-mode fiber as well as their length changes due to expansion effects when the temperature changes.

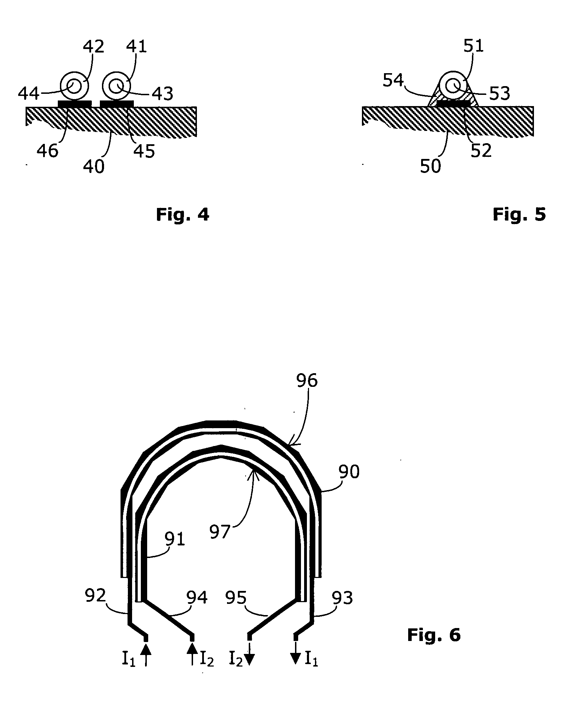

Preferably, the stabilizing means comprise a first heating element 45 thermally coupled to the first single-mode fiber segment 41, 43 and a second heating element 46 thermally coupled to the second single-mode fiber segment 42, 44, as schematically illustrated in the cross-section of Figure 4. The first heating element 45 and the second heating element 46 are situated on a common substrate 40 and the first single-mode fiber segment 41, 43 and the second single-mode fiber segment 42, 44 are placed on top of the heating elements 45, 46. The heating elements can be heated individually.

The heating elements can either partly or over the whole length be thermally coupled to the fiber segments.

In another advantageous embodiment, partially illustrated in Figure 5, the special mounting comprises an elastic soft-coating 54, preferably a silicon coating or glue-like material, in which the first single-mode fiber segment 51, 53 and the second single-mode fiber segment (not shown in Figure 5) are at least partially embedded. The fiber core 53 is enclosed in a coating 51 and the fiber rests on a substrate 50. When providing a mounting for the fibers of the interferometer, it is recommended to ensure that this mounting does not introduce stress or strain into the fiber core. The elastic soft-coating preferably has a hardness between 50 Shore A and 100 Shore A (i.e., between 25 Shore D and 40 Shore D).

Experiments and calculations have revealed that a few degree Kelvin are sufficient to stabilize the delay-line interferometer 20.

Metal lines 90, 91 can be employed as heating elements, whereby a current $I_1$ is forced to flow through a first metal line 90 and a current $I_2$ is forced to flow through a second metal line 91, as illustrated in the schematic top view of Figure 6. The bent fiber segments 96, 97 are shown as white curves. They sit on top of the metal lines 90, 91. The currents $I_1$ and $I_2$ heat the metal lines 90, 91 in a controlled manner. Supply lines 92 and 93 are connected to the first metal line 90 in order to conduct the current $I_1$ to and from the metal line 90. Supply lines 94 and 95 are connected to the second metal line 91 in order to conduct the current $I_2$ to and from the metal line 91. The metal lines and supply lines can be formed using standard photolithographic processes.

In another embodiment of the invention, only a short part of each fiber segment is actively heated using metal lines that are thermally coupled to the respective fibers. In this case, it is recommended to ensure that the remainder of the two fiber segments are kept at a common temperature. This can be achieved by arranging the remainder of these fiber segment on a metal pad. Since the metal pad is a good thermal conductor, a common temperature establishes.

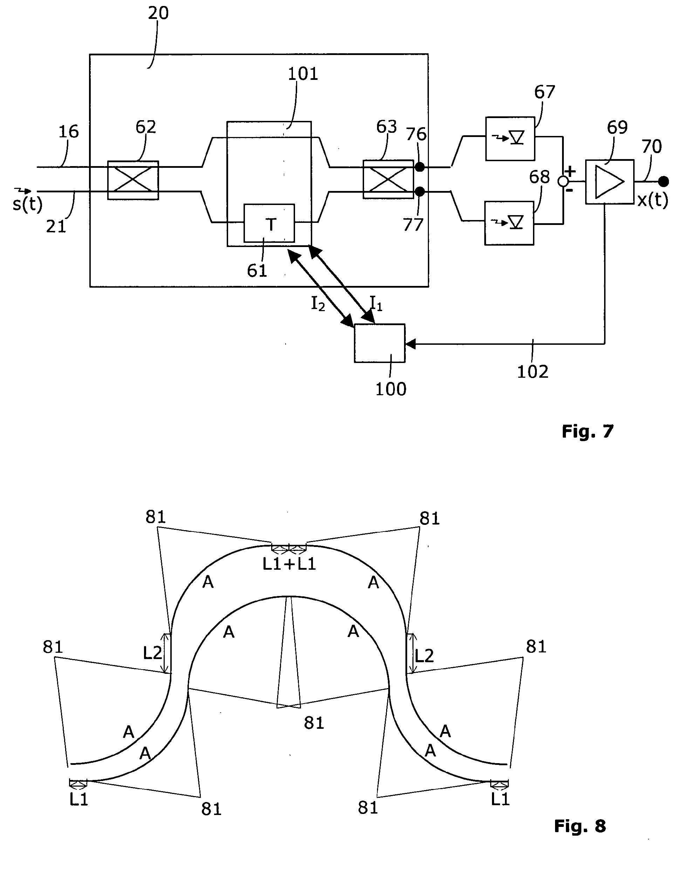

A control circuit 100 can be employed, that ensures that the necessary currents $I_1$ and $I_2$ are fed into the metal lines of a stabilizing means 101, as depicted in Figure 7. The control circuit 100 may be coupled via an interconnection 102 to the amplifier 69 of the balanced receiver, for example, to ensure that the drift due to temperature fluctuations is actively compensated. A control circuit 100 allows to reduce temperature induced fading in optical superposition. Due to the fact that each fiber segment has its own metal line for heating, a differential heating scheme can be employed. The power consumption for a differential heating of the two metal lines is relatively low.

In order to provide for a good thermal coupling between the metal lines and the fibers, the fibers can at least partially be embedded in a coating (cf. Figure 5). Ideally, the thermal coupling is realized such that it acts like a lowpass filter where any disturbance from outside is delayed in time. For this purpose, the fiber segments can be placed on a special heat sink. Preferably, this heat sink is thermally isolated with respect to the housing and thus with respect to the environment. By arranging the fibers on a heat sink that is isolated, one can ensure that any temperature influence from the outside is reduced and delayed (long time constant). At the same time, the active heating scheme employed has a short time constant, which allows to provide for an active control that is able to cope with the slowly changing temperatures from the outside.

One possible layout for the routing of the two fiber branches is depicted in Figure 8. The two branches both consist of curved standard elements 81 (each having an optical length LR and a bending angle A) and some straight elements. The outer branch comprises from left to right: a first curved standard element 81, a straight element of length L2, a second curved standard element 81, a straight element of length L1+L1, a third curved standard element 81, a straight element of length L2, and a fourth curved standard element 81. The inner branch comprises from left to right: a straight element of length L1, a first curved standard element 81, a second curved standard element 81, a third curved standard element 81, a fourth curved standard element 81, and a straight element of length L1. The total optical length of the outer branch is LO=LR+L2+LR+L1+L1+LR+L2+LR= 4LR+2L2+2L1, and the total optical length of the inner branch is LI=L1+LR+LR+LR+LR+L1= 4LR+2L1. The difference is LO-LI=2L2. One simply has to chose the appropriate length L2 for the straight elements to provide for the delay required to decode symbol-to-symbol phase changes. The polarization effect in both branches is the same, since identical curved standard elements 81 are used. The design rules are met, since the inner branch has a total optical length LI and the outer branch has a total optical length LO, with LI < LO, and since the inner branch has a total bending angle AI=A+A+A+A=4A and the outer branch has a total bending angle AO= A+A+A+A=4A, with AI = AO.

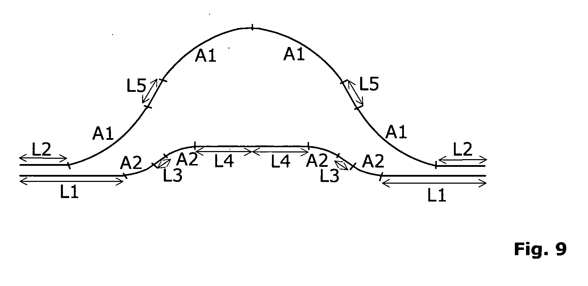

Another possible layout for the routing of the two fiber branches is depicted in Figure 9. Each branch consists of curved standard elements and some straight elements. The outer branch comprises from left to right: a straight element of length L2, a first curved standard element A1, a straight element of length L5, a second curved standard element A1, a third curved standard element A1, a straight element of length L5, a fourth curved standard element A1, and a straight element of length L2. The inner branch comprises from left to right: a straight element of length L1, a first curved standard element A2, a straight element of length L3, a second curved standard element A2, a straight element of length L4, a straight element of length L4, a third curved standard element A2, a straight element of length L3, a fourth curved standard element A2, and a straight element of length L1. In the present example, the radius of the curved standard elements used for the outer branch is r1=20mm and the angle A1 is 45°. The radius of the curved standard elements used for the inner branch is r2=10mm and the angle A1 is 22.5°. That is, the length LA1 of each curved standard element A1 is LA1=(r1 x π)/4 and the length LA2 of each curved standard element A2 is LA2=(r2 x π)/8. Since r2 = r1/2, LA2 can be expressed as follows: LA2=(r1 x π)/16, or LA2=LA1/4. The total optical length of the outer branch is LO=L2+LA1+L5+LA1+LA1+L5+LA1+L2= 4LA1+2L2+2L5, and the total optical length of the inner branch is LI=L1+LA2+L3+LA2+L4+L4+LA2+L3+LA2+L1= 4LA2+2L1+2L3+2L4. The difference is LO-LI=4LA1+2L2+2L5-(4LA2+2L1+2L3+2L4), or LO-LI=4LA1+2L2+2L5-LA1-2L1-2L3-2L4=3LA1+2L2+2L5-2L1-2L3-2L4. The radii and angles have been chosen so that the polarization effect due to the bending of the fibers is in both branches the same, since the total bending radius AI of the inner branch is identical to the total bending radius AO of the outer branch, i.e., AO=AI.

In most cases, the first single-mode fiber segment and the second single-mode fiber segment are both situated in the same plane which is usually the plane defined by the surface of a substrate. This reduces the degree of freedom when calculating the routing for the two delay line branches.

A glass substrate is well suited as mounting base for the delay-line interferometer, according to the present invention. When choosing a suited substrate for carrying the fibers, one can concentrate on the mechanical and thermal properties of the substrate material. The optical properties are not relevant. The lower the thermal conductivity of the substrate is, the less sensitive to temperature fluctuations the whole set will be.

Either stripped fiber segments or coated fiber segments can be used as first and second single-mode fiber segments.

According to the present invention, the first single-mode fiber segment and the second single-mode fiber segment each have a radius that is between 1 cm and 5 cm, and preferably between 2 cm and 2.5 cm.

According to another embodiment, both single-mode fiber segments are routed such that they are situated close to each other in order to ensure that the same thermal and mechanical conditions apply to both segments.

In some embodiments, the well-defined delay is in the range between 0.5 ps and 300 ps, and the difference LO - LI of the total lengths of the first and the second single-mode fiber segments 24, 25 is in the range of a few millimeters, preferably between 0.1 mm and 60 mm.

The various embodiments presented herein are designed for handling signals encoded using a D-PSK format or a BPSK (biphase-shift keying or binary phase-shift keying) format.

The delay-line interferometer and systems presented herein are well suited for use in optical receivers. Such optical receivers can be adapted for use in a wide-area network (WAN), for example. One can also realize a wavelength division multiplexer (WDM) comprising a delay-line interferometer 20 according to the present invention.

The receivers and systems presented herein can be used in optical transmission system comprising an optical channel and at least one D-PSK transmitter.

It is an advantage of the scheme presented herein that it does not require a local oscillator (LO) normally associated with coherent optical receivers. By eliminating the need for a local oscillator, a receiver can be implemented at a substantial cost savings.

It is another advantage of the invention that a stable operation can be maintained over varying ambient conditions (i.e., temperature, humidity, etc.).

In the drawings and specification there has been set forth preferred embodiments of the invention and, although specific terms are used, the description thus given uses terminology in a generic and descriptive sense only and not for purposes of limitation.

**Claims**

1. Device comprising

   a. a device input (21) for receiving a D-PSK-encoded light wave s(t),
   b. a first beam splitter (22; 62) having an input (31), a first output (32) and a second output (33), the input (31) being optically connected to the device input (21),
   c. a first single-mode fiber segment (24; 96) having a segment input (32) and a segment output (35), the segment input (32) being optically connected to the first output (32) of the first beam splitter (22; 62),
   d. a second single-mode fiber segment (25; 97) having a segment input (33) and a segment output (34), the segment input (33) being optically connected to the second output (33) of the first beam splitter (22; 62),
   e. a second beam splitter (23; 63) having a first input (35), a second input (34), a first output (36; 76), and a second output (37; 77), the first input (35) being optically connected to the segment output (35) of the first fiber segment (24; 96), and the second input (34) being optically connected to the segment output (34) of the second fiber segment (25; 97),

   whereby

   - the first single-mode fiber segment (24; 96) has a total optical length LI and the second single-mode fiber segment (25; 97) has a total optical length LO, with LI being smaller than LO,
   - the first single-mode fiber segment (24; 96) has a total bending angle AI and the second single-mode fiber segment (25; 97) has a total bending angle AO, with AI = AO.

2. The device of claim 1, whereby the difference LO - LI is chosen to provide for a desired run-time delay ($T_s$) between an intermediate light wave that is guided via the first beam splitter (22; 62) into the first single-mode fiber segment (24; 96) and an intermediate light wave that is guided via the first beam splitter (22; 62) into the second single-mode fiber segment (25; 97).

3. The device of claim 1 or 2, comprising a first light sensitive device (27; 67), a second light sensitive device (28; 68), and an amplifier (29; 69), whereby

   - the first output (36; 67) of the second beam splitter (23; 63) is optically coupled to the first light sensitive device (27; 67),
   - the second output (37; 77) of the second beam splitter (23; 63) is optically coupled to the second light sensitive device (28; 68), and
   - the first light sensitive device (27; 67) and the second light sensitive device (28; 68) are electrically connected to an input of the amplifier (29; 69).

4. The device of claim 1, 2 or 3, whereby the polarization of an intermediate light wave at the segment input (32) of the first single-mode fiber segment (24; 96) and the polarization of an intermediate light wave at the segment input (33) of the second single-mode fiber segment (25; 97) have the same polarization as the intermediate light waves ($s_1(t)$, $s_2(t)$) at the segment outputs (35, 34) of the first single-mode fiber segment (24; 96) and the second single-mode fiber segment (25; 97).

5. The device of claim 1, 2 or 3, whereby the first single-mode fiber segment (24; 96) and the second single-mode fiber segment (25; 97) are the branches of a delay-line interferometer (20; 60).

6. The device of one of the preceding claims, whereby the first single-mode fiber segment (24; 96) and the second single-mode fiber segment (25; 97) are arranged in a pre-determined manner to ensure that the curvature of the first single-mode fiber segment (24; 96) and the curvature of the second single-mode fiber segment (25; 97) are such that the condition RI = RO is satisfied.

7. The device of one of the preceding claims, whereby the first beam splitter (22; 62) and the second beam splitter (23; 63) are 3dB-couplers.

8. The device of one of the preceding claims, whereby the sensitivity against temperature gradients is reduced by a special mounting of the first single-mode fiber segment (24; 96) and the second single-mode fiber segment (25; 97).

9. The device of claim 8, whereby the special mounting comprises a substrate (40; 50) with low thermal conductivity and preferably with a thermal expansion coefficient matching the thermal expansion coefficient of the first single-mode fiber segment (24; 96) and the second single-mode fiber segment (25; 97).

10. The device of claim 8, whereby the special mounting comprises a coating (54), preferably a silicon coating, in which the first single-mode fiber segment and the second single-mode fiber segment are at least partially embedded.

11. The device of one of the preceding claims, comprising stabilizing means (45, 46; 90 - 95; 100 - 102) providing for reduced temperature deviations.

12. The device of claim 11, whereby the stabilizing means comprise a first heating element (45; 90) thermally coupled to the first single-mode fiber segment (41, 43; 96) and a second heating element (46; 91) thermally coupled to the second single-mode fiber segment (42, 44; 97), whereby the first heating element (45; 90) and the second heating element (46; 91) are situated between a substrate (40) and the first single-mode fiber segment (41, 43; 96) and the second single-mode fiber segment (42, 44; 97).

13. The device of one of the preceding claims, whereby the first single-mode fiber segment (24; 96) and the second single-mode fiber segment (25; 97) are both situated in the same plane.

14. The device of one of the preceding claims, whereby the first single-mode fiber segment (24; 96) and/or the second single-mode fiber segment (25; 97) are stripped fiber segments or coated fiber segments (41, 43, 42, 44).

15. The device of one of the preceding claims, whereby the desired run-time delay is equal to the symbol length ($T_s$) of the light wave s(t) received.

16. The device of one of the preceding claims, whereby the first single-mode fiber segment (24; 96) and the second single-mode fiber segment (25; 97) each have a radius that is between 1 cm and 5 cm, and preferably between 2 cm and 2.5 cm.

17. Optical receiver comprising a device according to one of the claims 1 - 16.

18. Optical receiver of claim 17, being adapted for use in a wide-area network (WAN).

19. Optical transmission system comprising an optical channel, a D-PSK transmitter and an optical receiver according to one of the claims 17 or 18.

20. Wavelength division multiplexer (WDM) comprising a device according to one of the claims 1 - 16.

21. Method for processing an optical D-PSK signal s(t) used for information transmission, comprising:

   a. receiving the optical D-PSK signal s(t) at a device input (21),
   b. guiding the optical D-PSK signal s(t) to an input (31) of a first beam splitter (22; 62),
   c. splitting the optical D-PSK signal s(t) into two intermediate signals and providing a first one of the two intermediate signals at a first output (32) and a second one of the two intermediate signals at a second output (33) of the first beam splitter (22; 62),
   f. guiding the first one of the two intermediate signals through a first single-mode fiber segment (24; 96),

g. guiding the second one of the two intermediate signals through a second single-mode fiber segment (25; 97),

h. superposing the first one of the two intermediate signals ($s_1(t)$) and the second one of the two signals ($s_2(t)$) after they traveled through the first single-mode fiber segment (24; 96) and the second single-mode fiber segment (25; 97), respectively,

whereby

- the first single-mode fiber segment (24; 96) has a total optical length LI and the second single-mode fiber segment (25; 97) has a total optical length LO, with LI being smaller than LO,
- the first single-mode fiber segment (24; 96) has a total bending angle AI and the second single-mode fiber segment (25; 97) has a total bending angle AO, with AI = AO.

22. The method of claim 21, comprising the steps:

- feeding optical signals provided after superposition into two diodes (27, 28; 76, 77) of a balanced receiver;
- adding electrical signals provided by the diodes (27, 28; 76, 77); and
- amplifying the electrical signal.

23. The method of claim 21 or 22, comprising the step:

- controlling the temperature of the first single-mode fiber segment (24; 96) and the second single-mode fiber segment (25; 97) in order to compensate temperature induced effects.

24. The method of claim 23, comprising the step:

- applying a current ($I_1$, $I_2$) to at least one heating element (90, 91) to locally increase the temperature of at least the first single-mode fiber segment (24; 96) or the second single-mode fiber segment (25; 97).

EP 1 335 510 A1

Fig. 1

Fig. 2A

12

**Fig. 2B**

**Fig. 3**

Fig. 4

Fig. 5

Fig. 6

**Fig. 7**

**Fig. 8**

**Fig. 9**

**European Patent Office**

# EUROPEAN SEARCH REPORT

Application Number

EP 02 00 3039

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | SWANSON E A LIVAS J C ET AL: "HIGH SENSITIVITY OPTICALLY PREAMPLIFIED DIRECT DETECTION DPSK RECEIVER WITH ACTIVE DELAY-LINE STABILIZATION" IEEE PHOTONICS TECHNOLOGY LETTERS, IEEE INC. NEW YORK, US, vol. 6, no. 2, 1 February 1994 (1994-02-01), pages 263-265, XP000439768 ISSN: 1041-1135 * the whole document * | 1-24 | H04B10/158 H04B10/148 H04B10/142 H04B10/135 |
| X | WO 01 29975 A (HAYES, ROBERT) 26 April 2001 (2001-04-26) * page 6, line 4 - page 6, line 31; claims 1,5; figure 2 * | 1-28 | |
| X | PAUL T J ET AL: "3GBIT/S OPTICALLY PREAMPLIFIED DIRECT DETECTION DPSK RECEIVER WITH 116PHOTON/BIT SENSITIVITY" ELECTRONICS LETTERS, IEE STEVENAGE, GB, vol. 29, no. 7, 1 April 1993 (1993-04-01), pages 614-615, XP000360842 ISSN: 0013-5194 * the whole document * | 1-28 | TECHNICAL FIELDS SEARCHED (Int.Cl.7) H04B |
| A | PENDOCK G J ET AL: "Multi-gigabit per second demonstration of photonic code-division multiplexing" ELECTRONICS LETTERS, IEE STEVENAGE, GB, vol. 31, no. 10, 11 May 1995 (1995-05-11), pages 819-820, XP006002824 ISSN: 0013-5194 * the whole document * | 1-28 | |

The present search report has been drawn up for all claims

| Place of search | Date of completion of the search | Examiner |
|---|---|---|
| MUNICH | 9 July 2002 | Shaalan, M |

EPO FORM 1503 03.82 (P04C01)

**ANNEX TO THE EUROPEAN SEARCH REPORT
ON EUROPEAN PATENT APPLICATION NO.**                    EP 02 00 3039

This annex lists the patent family members relating to the patent documents cited in the above-mentioned European search report.
The members are as contained in the European Patent Office EDP file on
The European Patent Office is in no way liable for these particulars which are merely given for the purpose of information.

09-07-2002

| Patent document cited in search report | Publication date | Patent family member(s) | Publication date |
|---|---|---|---|
| WO 0129975 A | 26-04-2001 | US 6266173 B1<br>AU 1629101 A<br>WO 0129975 A2 | 24-07-2001<br>30-04-2001<br>26-04-2001 |

For more details about this annex : see Official Journal of the European Patent Office, No. 12/82